# EUROPÄISCHE PATENTSCHRIFT

(11) **EP 4 437 264 B1**
(45) Veröffentlichungstag und Bekanntmachung des Hinweises auf die Patenterteilung: **15.04.2026**
(21) Anmeldenummer: 22808858.9
(22) Anmeldetag: 09.11.2022
(51) Int. Cl.: F17C 13/08

(54) **RAIL FÜR EIN WASSERSTOFF-DRUCKTANKSYSTEM ALS STRANGGEPRESSTES PROFILBAUTEIL**
RAIL FOR A HYDROGEN PRESSURE TANK SYSTEM IN THE FORM OF AN EXTRUDED PROFILE COMPONENT
RAIL POUR UN SYSTÈME DE RÉSERVOIR D'HYDROGÈNE SOUS PRESSION SOUS FORME D'UN PROFILÉ EXTRUDÉ

(30) Priorität: 25.11.2021 DE 102021213277
(43) Veröffentlichungstag der Anmeldung: 02.10.2024
(73) Patentinhaber: Robert Bosch GmbH, 70442 Stuttgart (DE)
(72) Erfinder: SCHUELKE, Armin, 71134 Aidlingen (DE)
(86) Internationale Anmeldenummer: PCT/EP2022/081276
(87) Internationale Veröffentlichungsnummer: WO 2023/094159

(56) Entgegenhaltungen:
- WO-A1-2021/220128
- DE-A1- 102014 016 962
- FR-A1- 2 905 446
- US-A1- 2014 130 896
- US-B2- 6 708 719

## Beschreibung

Die vorliegende Erfindung betrifft ein sogenanntes Rail zum Verbinden mehrerer Wasserstoff-Drucktanks in einem Wasserstoff-Drucktanksystem sowie ein Wasserstoff-Drucktanksystem mit einem solchen Rail.

### Stand der Technik

Bei Fahrzeugen mit einem Brennstoffzellensystem kann zum Versorgen mit Wasserstoff ein Drucktanksystem installiert sein. Dieses kann aus mehreren Druckbehältern bestehen, die mittels eines gemeinsamen Rails hydraulisch miteinander verbunden sind. Dabei werden die einzelnen Flaschen nach dem Stand der Technik mit dem Rail dadurch verbunden, dass die Flaschen auf einzelne, im Rail integrierte Gewindestutzen aufgeschraubt werden. Als Alternative ist bekannt, die einzelnen Flaschen mittels Verbindungshülsen und diverser Befestigungsarten am Rail druckdicht zu fixieren.

Rails haben üblicherweise rohrförmig konzentrische Querschnitte. Eine zentrische Bohrung kann von einer oder von zwei Stirnseiten ausgebohrt werden. Dabei besteht durch die oftmals größere Länge die Gefahr, dass ein zum Bohren verwendeter Bohrer nicht gerade verläuft und die Bohrung anschließend exzentrisch im Rail sitzt, oder dass sich die Bohrungen bei beidseitig gebohrten Rails nicht genau treffen. Die Folge könnten inhomogene Spannungsverteilungen bei anliegendem Druck und/oder lokale Druckspitzen sein, die zum Versagen des Bauteils führen können.

Die WO 2021/220128 A1 offenbart ein Rail zum Verbinden mehrerer Wasserstoff-Drucktanks in einem Wasserstoff-Drucktanksystem.

Die DE 10 2014 016962 A1 offenbart eine Vorrichtung zum Speichern von Gasen mit mehreren Druckgasbehältern mit jeweils wenigstens einer eigenen Ventileinrichtung und einem gemeinsamen Einfüllstutzen.

Aus der US 2014/130896 A1 ist eine Druckspeicheranordnung mit mindestens zwei Druckbehältern bekannt, wobei die mindestens zwei Druckbehälter so ausgebildet sind, dass sie in fluidleitender Weise über eine Verbindungsvorrichtung miteinander verbunden sind.

Die FR 2 905 446 A1 offenbart eine Vorrichtung zum Kuppeln von kleinen kartuschenartigen Gasbehältern und insbesondere eine Schraubventilkartusche.

Die US 6 708 719 B2 zeigt eine Befestigungsstruktur für eine Vielzahl von Gasbehältern mit hohem Druck, wobei die Befestigungsstruktur ein blockförmiges Behälterbefestigungselement mit hoher Steifigkeit aufweist.

### Offenbarung der Erfindung

Es ist eine Aufgabe der Erfindung, ein Rail für ein Drucktanksystem oder ein Drucktanksystem mit einem Rail vorzuschlagen, wobei an dem Rail eine möglichst homogene Spannungsverteilung und möglichst keine lokalen Druckspitzen vorliegen.

Die Erfindung betrifft ein Wasserstoff-Drucktanksystem, aufweisend mehrere Wasserstoff-Drucktanks, und ein Rail nach der vorangehenden Beschreibung, wobei die Wasserstoff-Drucktanks jeweils über ein individuelles Anschlusselement mit einem Anschlusskanal des Rails verbunden sind, sodass sie in Fluidverbindung mit dem mindestens einen Längskanal stehen. Beispielsweise kann das Wasserstoff-Drucktanksystem in einem Brennstoffzellenfahrzeug eingesetzt sein.

Die Aufgabe wird gelöst durch ein Wasserstoff-Drucktanksystem mit einem Rail mit den Merkmalen des unabhängigen Anspruchs 1. Vorteilhafte Ausführungen und Weiterbildungen sind den Unteransprüchen und der nachfolgenden Beschreibung zu entnehmen.

Es wird ein Wasserstoff-Drucktanksystem mit einem Rail zum Verbinden mehrerer Wasserstoff-Drucktanks in einem Wasserstoff-Drucktanksystem vorgeschlagen, aufweisend eine erste Stirnseite, eine der ersten Stirnseite entgegengesetzt angeordnete zweite Stirnseite, mindestens ein sich von der ersten Stirnseite zur zweiten Stirnseite erstreckender Längskanal, wobei das Rail als stranggepresstes Profilbauteil mit gleichbleibendem Querschnitt ausgeführt ist, wobei der mindestens eine Längskanal als mindestens eine Aussparung in dem Querschnitt ausgebildet ist, wobei der Querschnitt vorzugsweise mindestens eine Achs- oder Punktsymmetrie aufweist, und wobei sich mindestens ein Anschlusskanal von einer zwischen den Stirnseiten verlaufenden Seitenfläche quer in den mindestens einen Längskanal erstreckt und mit einem Anschlusselement zum Anschließen eines Wasserstoff-Drucktanks verbindbar ist. Es ist im vorgenannten Sinne jedoch auch denkbar, dass der Querschnitt mehreckig, insbesondere auch polygonförmig ist.

Das Wasserstoff-Drucktanksystem mit einem Rail ist bevorzugt ein längliches bzw. langgestrecktes Bauteil, dessen Länge auf die Anzahl von Wasserstoff-Drucktanks angepasst ist, die mit dem Rail zu verbinden sind. Das Rail wird durch zwei einander entgegengesetzte Stirnseiten begrenzt. Von der ersten Stirnseite zur zweiten Stirnseite, d.h. über die gesamte Länge des Rails, erstreckt sich mindestens ein Längskanal. Der Längskanal dient als Verbindungselement mehrerer Wasserstoff-Drucktanks. Diese können jeweils durch einen entsprechenden Anschlusskanal mit dem mindestens einen Längskanal in Fluidverbindung gebracht werden. Dies bedeutet, dass sich der entsprechende Anschlusskanal von einer Seitenfläche radial in den mindestens einen Längskanal hinein erstreckt. Eine Erstreckungsachse des mindestens einen Längskanals und eine Erstreckungsachse des betreffenden Anschlusskanals schneiden sich folglich, um diese beiden Kanäle miteinander zu verbinden.

Ein besonderer Vorteil liegt in der Tatsache, dass das Rail als stranggepresstes Profil ausgebildet ist. Dadurch können praktisch beliebige Längen des Rails realisiert werden, wobei der lokale Querschnitt entlang der gesamten Längserstreckung gleichbleibt. Das Anfertigen von Bohrungen entlang einer Längsachse, d.h. entlang einer Verbindungslinie zwischen den beiden Stirnseiten, ist nicht notwendig. Folglich sinkt der Herstellaufwand deutlich und die Präzision wird gesteigert. Zudem erlaubt das Verwenden von stranggepressten Profilen auch die Rea lisierung komplexerer Querschnitte. Wie weiter nachfolgend dargestellt wird, können auch mehrere Längskanäle mit teilweise unterschiedlichen Strömungsquerschnitten nebeneinander vorgesehen sein, die für unterschiedliche Zwecke Verwendung finden.

Durch die vorzugsweise Punkt- oder Achssymmetrie kann eine mechanische Belastung im Innern des Rails optimiert werden. Es können asymmetrische Belastungen verhindert werden, die insbesondere bei hohen Gasdrücken von etwa bis zu 700 bar und stark schwankenden Temperaturbereichen verhindert werden, die in einem ungünstigen Fall zu Verformungen des Rails führen können.

Es ist überdies denkbar, für bestimmte Anwendungszwecke standardisierte, stranggepresste Profile einzusetzen, sodass die Herstellkosten durch Verwendung von Standardbauteilen noch weiter verringert werden können. Zum Verhindern des Austretens von Wasserstoff an den Stirnseiten des Rails könnten dort geeignete Stopfen oder andere Verschlüsse eingesetzt werden. Es ist weiterhin denkbar, hier die entsprechenden Öffnungen der Längskanäle an den Stirnseiten zu verschweißen. Zudem ist denkbar, an den Stirnseiten Zu- und Abflussanschlüsse vorzusehen, mit denen Wasserstoff in das Wasserstoff-Drucktanksystem einleitbar ist oder über die Wasserstoff aus dem Wasserstoff-Drucktanksystem entnehmbar ist.

Das Wasserstoff-Drucktanksystem mit einem Rail könnte mindestens zwei parallel zueinander verlaufende Längskanäle aufweisen, die in dem Querschnitt voneinander beabstandet sind. Durch die Verwendung zweier Längskanäle könnte eine Redundanz geschaffen werden. Beim Integrieren mehrerer Wasserstoff-Drucktanks in ein Drucktanksystem wäre vorstellbar, die Drucktanks zum Beispiel in zwei Gruppen aufzuteilen, wobei die Drucktanks der einen Gruppe mit einem der beiden Längskanäle verbunden sind und die Drucktanks der anderen Gruppe mit dem anderen der beiden Längskanäle verbunden sind. Sollte es zu einem mechanischen Defekt des Rails kommen, könnte die Wahrscheinlichkeit erhöht werden, dass zumindest eine Gruppe der Drucktanks noch ausreichend dicht mit einem Wasserstoffverbraucher über das Rail verbunden sind. Sollte einer der beiden Längskanäle eine Leckage aufweisen, könnten die damit verbundenen Drucktanks geschlossen werden, beispielsweise über individuell an den Drucktanks angeordnete Ventile.

Das Wasserstoff-Drucktanksystem mit einem Rail könnte weiterhin mindestens zwei parallel zueinander verlaufende Längskanäle mit identischen Durchmessern oder durchströmten Flächen aufweisen. Durch die identischen Durchmesser werden in beiden Rails identische Strömungsverhältnisse, d.h. strömungsmechanische Reibungsbeiwerte und dergleichen, realisiert. Werden die beiden Längskanäle zur Erzeugung einer Redundanz verwendet, ist besonders sinnvoll, dass in beiden Längskanälen dieselben Strömungsverhältnisse herrschen.

Das Wasserstoff-Drucktanksystem mit einem Rail könnte weiterhin mindestens zwei parallel zueinander verlaufende Längskanäle mit voneinander verschiedenen Durchmessern oder durchströmten Flächen aufweisen. Die verschiedenen Durchmesser könnten unterschiedliche Funktionen zugeordnet werden. Es ist etwa denkbar, dass ein Längskanal mit einem größeren Durchmesser zur Bewältigung größerer Volumenströme prädestiniert ist. Dies kann insbesondere einen Betankungsvorgang betreffen, bei dem ein entsprechender Betankungsanschluss mit diesem Längskanal verbunden ist, um relativ rasch die Drucktanks befüllen zu können. Bei einem herkömmlichen Betrieb des Wasserstoff-Drucktanksystems können indes die betreffenden Drucktanks den Wasserstoff über einen Längskanal mit einem geringeren Querschnitt abgeben. Diese Ausführung kann nicht nur das Betanken beschleunigen, sondern auch ein mögliches Restvolumen innerhalb des Rails nach dem Schließen der Drucktanks reduzieren.

Es könnte vorgesehen sein, dass in zwei einander diametral gegenüberliegenden Abschnitten der Seitenflächen des Rails jeweils ein Anschlusskanal mündet, der jeweils mit einem des mindestens einen Längskanals verbunden ist. Dies könnte bedeuten, dass sich der mindestens eine Anschlusskanal quer durch das Rail erstreckt und an zwei einander entgegengesetzten Enden jeweils ein Anschlusselement zum Anschließen jeweils eines Wasserstoff-Drucktanks aufweist. Allerdings könnten auch zwei separate Anschlusskanäle vorgesehen sein, die in einem von zwei benachbarten Längskanälen münden und sich nicht schneiden bzw. überlappen. Insgesamt kann damit an einem Rail mit einer begrenzten Länge eine doppelte Anzahl von Drucktanks angebunden werden, im Vergleich zu lediglich einseitig angeordneten Drucktanks. Die Anschlusskanäle können durch Anfertigen zweier separater Sacklochbohrungen oder einer durchgehenden Bohrung realisiert werden, die dann jeweils den betreffenden Längskanal schneidet, mit dem eine Verbindung hergestellt werden soll. Befindet sich der Längskanal mittig in dem Profil des Trails, könnte etwa eine diametrale Bohrung vorgesehen sein.

Das Wasserstoff-Drucktanksystem mit einem Rail könnte weiterhin eine Rippenstruktur an der Seitenfläche zum Zu- oder Abführen von Wärme aufweisen. Beim Betanken und einer entsprechenden Druckbeaufschlagung kann Wärme in dem Rail entstehen, welche durch die betreffende Rippenstruktur zumindest teilweise abgeführt werden kann. Allerdings wäre auch das Zuführen von Wärme aus der Umgebung denkbar, wenn durch eine kontinuierliche Abgabe von Wasserstoff und einer damit einhergehenden Expansion eine niedrige Temperatur an den Anschlusselementen bzw. den Drucktanks und dem Rail vorliegt.

Das Rail könnte mindestens einen ersten Längskanal und mindestens einen zweiten Längskanal aufweisen, wobei ein Strömungsquerschnitt des mindestens einen zweiten Längskanals größer ist als ein Strömungsquerschnitt des mindestens einen ersten Längskanals, und wobei eine Fluidverbindung zwischen den Wasserstoff-Drucktanks und dem mindestens einen ersten Längskanal sowie dem mindestens einen zweiten Längskanal selektiv trennbar ist. Wie vorangehend dargestellt kann der größere der Längskanäle für das Betanken verwendet werden, während der kleinere Längskanal für den herkömmlichen Betrieb vorgesehen ist. Es ist denkbar, zum Umschalten zwischen einer Verbindung mit dem einen oder dem anderen Längskanal jeweils ein umschaltbares Ventil vorzusehen.

Das Rail könnte auch mindestens einen dritten Längskanal mit einer darin angeordneten elektrischen Leitung aufweisen. Das Anfertigen von Längskanälen in einem stranggepressten Profil ist sehr einfach, sodass auch das Integrieren eines Kabelkanals in das Rail ohne weiteres möglich ist. Eine elektrische Leitung könnte neben Stromleitungen auch Sensor- oder Steuerleitungen umfassen, die für den Betrieb des Wasserstoff-Drucktanksystems hilfreich sind.

Das Rail könnte auch mindestens einen vierten Längskanal aufweisen, in dem ein Leckagesensor angeordnet ist, der dazu ausgebildet ist, Wasserstoff zu detektieren, der aus einem anderen Längskanal austritt und durch den Querschnitt des Rails in den vierten Längskanal eintritt. Reißt oder bricht das Rail, könnte Wasserstoff aus einem der in dem Rail angeordneten Längskanal in einen direkt dazu benachbarten Längskanal eintreten. Dieser benachbarte Längskanal könnte bevorzugt im normalen Betrieb des Wasserstoff-Drucktanksystems unbenutzt bleiben, sodass sich in diesem Zustand kein Wasserstoff darin befindet. In diesem Längskanal kann ein Sensor angeordnet sein, der das Eintreten von Wasserstoff detektiert. Wird Wasserstoff detektiert, spricht dies für eine Leckage bzw. eine Beschädigung des Rails, sodass weitere Aktionen, etwa das Absperren des beschädigten Längskanal, vorgenommen werden können.

Schließlich könnten zwei Wasserstoff-Drucktanks an zwei einander entgegengesetzten Seiten angeordnet sein und eine Halteklammer einen formschlüssigen Kontakt mit beiden Wasserstoff-Drucktanks herstellen, wobei die Halteklammer das Rail quer zu dem mindestens einen Längskanal überspannt. Die Wasserstoff-Drucktanks könnten spiegelverkehrt zueinander angeordnet sein. Die Halteklammer könnte dazu ausgebildet sein, mit Formmerkmalen der beiden Drucktanks in Verbindung zu geraten. Beispielsweise könnten beide Drucktanks jeweils einen Kragen oder Flansch aufweisen, der mit der Halteklammer in Flächenkontakt bringbar ist.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Es zeigt:
Figur 1 ein Rail mit mehreren, einseitig angeordneten Drucktanks;
Figur 2 ein Rail mit mehreren, zweiseitig angeordneten und ein Rail einschließenden Drucktanks;
Figur 3 eine Teilschnittdarstellung von Figur 2; und
Figur 4 eine isometrische Teilansicht eines Verbindungsbereichs zweier Drucktanks an einem Rail.

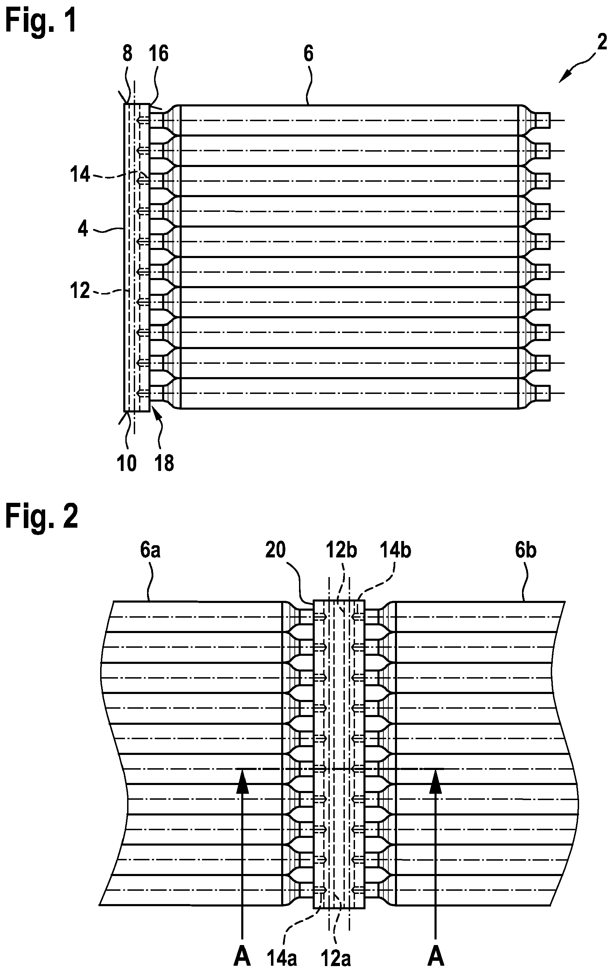

Fig. 1 zeigt ein Wasserstoff-Drucktanksystem 2 mit einem länglichen Rail 4 und mehreren, mit dem Rail 4 verbundenen Wasserstoff-Drucktanks 6. Das Rail 4 ist als stranggepresstes Bauteil ausgebildet und weist eine erste Stirnseite 8 und eine zweite Stirnseite 10 auf, welche das Rail 4 in einer Längsrichtung begrenzen. Zwischen der ersten Stirnseite 8 und der zweiten Stirnseite 10 erstreckt sich im Innern des Rails 4 beispielhaft ein Längskanal 12, der hier gestrichelt dargestellt ist. Zum Anschließen der Drucktanks 6 ist jeweils ein Anschlusskanal 14 vorgesehen, der sich quer zu dem Längskanal 12 erstreckt. Der Anschlusskanal 14 erstreckt sich dabei durch eine den Drucktanks 6 zugewandte Seitenfläche 16 und wird über ein Anschlusselement 18 mit dem jeweiligen Drucktank 6 verbunden.

An zumindest einer der Stirnseiten 8 und 10 könnte ein Betankungs- und/oder Entnahmeanschluss (nicht gezeigt) vorgesehen sein. Hierüber kann das Wasserstoff-Drucktanksystem 2 betankt werden oder Wasserstoff an einen Wasserstoffverbraucher abgeben.

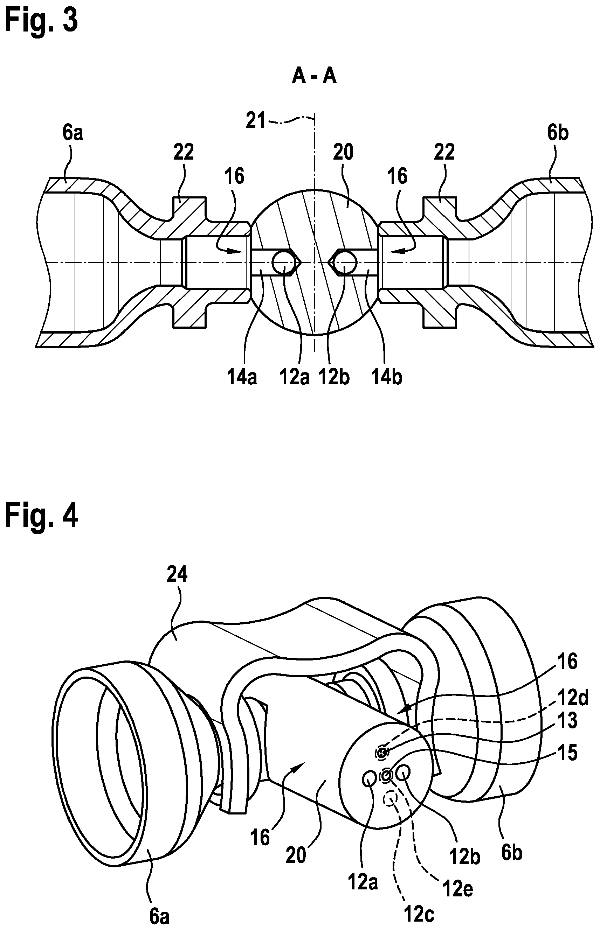

Fig. 2 zeigt ein modifiziertes Rail 20, welches im Wesentlichen dem Rail 4 entspricht, wobei jedoch beidseitig Wasserstoffdrucktanks 6a und 6b daran angeordnet sind. Hierzu erstrecken sich jeweils Anschlusskanäle 14a und 14b von einer zu dem jeweiligen Drucktank 6a bzw. 6b gerichteten Seitenfläche 16 in einen jeweiligen Längskanal 14a bzw. 14b des Rails 20, wie in Fig. 3 näher gezeigt. An dieser Stelle sei darauf hingewiesen, dass zwei aufeinander zu laufende Anschlusskanäle 14a und 14b auch miteinander verbunden sein könnten, um einen gemeinsamen Anschlusskanal 14 zu bilden, der etwa mit einem einzelnen Längskanal 12 verbunden sein könnte.

In Fig. 3 wird das Rail 20 in einer Schnittdarstellung A-A gezeigt, wobei die Schnittlinie in Fig. 2 gekennzeichnet ist. Der Schnitt verläuft mittig durch die Drucktanks 6a und 6b. Hier ist ersichtlich, dass der Längskanal 12a und der Längskanal 12b parallel und in einem Abstand zueinander verlaufen, wobei der Querschnitt des Rails 20 symmetrisch zu einer Hochachse 21 ist. In dieser Darstellung sind beide Drucktanks 6a und 6b durch den jeweils zugeordneten Anschlusskanal 14a bzw. 14b mit dem Rail 20 verbunden. Folglich bilden alle Drucktanks 6a auf einer Seite des Rails 20 eine erste Gruppe aus, während die Drucktanks 6b auf der anderen Seite des Rails 20 eine zweite Gruppe ausbilden. Jede Gruppe weist einen eigenen Längskanal 12a bzw. 12b auf, sodass hiermit eine Redundanz realisiert wird.

Die Drucktanks 6a bzw. 6b weisen jeweils an einer zu dem Rail 20 gewandten Seite einen umlaufenden, radial vorspringenden Kragen 22 auf. Dieser ist zum Befestigen einer Halteklammer 24 geeignet, wie in Fig. 4 dargestellt. Die Halteklammer 24, welche etwa aus einem metallischen Material geformt ist, verbindet zwei einander gegenüberliegende Drucktanks 6a und 6b durch einen Formschluss an den Kragen 22 und überspannt dabei das Rail 20. Dadurch werden die Drucktanks 6a und 6b in der vorgesehenen Position mit einer zu dem Rail 20 hin wirkenden Kraft gehalten. Die Halteklammer 24 kann federnd ausgebildet sein, sodass sie in der gezeigten Position die Kragen 22 zueinander verspannt.

In dem Querschnitt des Rails 20 werden beispielhaft mögliche weitere Optionen mit gestrichelten Linien dargestellt. Die Längskanäle 12a und 12b können aufgrund ihrer redundanten Anordnung als erste Längskanäle bezeichnet werden. Ein zweiter Längskanal 12c mit einem größeren Durchmesser könnte vorgesehen sein, der etwa zum Betanken dient und mit den Drucktanks 6a bzw. 6b über hier nicht gezeigte Mittel in Verbindung bringbar ist. Ein dritter Längskanal 12d kann vorgesehen sein, um eine elektrische Leitung 13 aufzunehmen, welche etwa eine Steuer- oder Stromversorgungsleitung ist. Ein vierter Längskanal 12e könnte mittig in dem Querschnitt des Rails 20 angeordnet sein und einen Sensor 15 aufweisen, der zum Erfassen von Wasserstoff ausgebildet ist. Tritt Wasserstoff beispielsweise aus einem der ersten Längskanäle 12a und 12b aus, beispielsweise durch einen Riss oder Bruch in dem Rail 20, könnte er in den vierten Längskanal 12e eintreten und dort durch den Sensor 15 erfasst werden. Daraufhin könnte eine mit dem Sensor 15 verbundene Steuereinheit einen Befehl zum Unterbrechen einer Wasserstoffzufuhr oder dergleichen ausgeben.

## Patentansprüche

1. Wasserstoff-Drucktanksystem (2), mit mehreren Wasserstoff-Drucktanks (6, 6a, 6b),
wobei die Wasserstoff-Drucktanks (6, 6a, 6b) jeweils über ein individuelles Anschlusselement (18) mit einem Anschlusskanal eines Rails (4, 20) verbunden sind, sodass sie in Fluidverbindung mit dem mindestens einen Längskanal (12, 12a, 2b) stehen und dem Rail (4, 20), wobei das Rail (4, 20) -eine erste Stirnseite (8) aufweist und wobei das Rail (4, 20)eine der ersten Stirnseite (8) entgegengesetzt angeordnete zweite Stirnseite (10) aufweist, und wobei das Rail (4, 20) mindestens ein sich von der ersten Stirnseite (8) zur zweiten Stirnseite (10) erstreckenden Längskanal (12, 12a, 12b, 12c, 12d, 12e) aufweist, und
wobei das Rail (4, 20) als stranggepresstes Profilbauteil mit gleichbleibendem Querschnitt ausgeführt ist und
wobei der mindestens eine Längskanal (12, 12a, 12b, 12c, 12d, 12e) als mindestens eine Aussparung in dem Querschnitt ausgebildet ist und wobei der Querschnitt mindestens eine Achs- oder Punktsymmetrie oder eine polygonale Form aufweist, und
wobei sich mindestens ein Anschlusskanal (14, 14a, 14b) von einer zwischen den Stirnseiten (8, 10) verlaufenden Seitenfläche (16) quer in den mindestens einen Längskanal (12, 12a, 12b, 12c, 12d, 12e) erstreckt und mit einem Anschlusselement (18) zum Anschließen eines Wasserstoff-Drucktanks (6, 6a, 6b) verbindbar ist, **dadurch gekennzeichnet, dass** das Rail (4, 20) mindestens einen dritten Längskanal (12d) mit einer darin angeordneten elektrischen Leitung (13) aufweist.

2. Wasserstoff-Drucktanksystem (2) nach Anspruch 1,
wobei das Rail (4, 20) mindestens einen ersten Längskanal (12a, 12b) und mindestens einen zweiten Längskanal (12c) aufweist,
wobei ein Strömungsquerschnitt des mindestens einen zweiten Längskanals (12c) größer ist als ein Strömungsquerschnitt des mindestens einen ersten Längskanals (12a), und
wobei eine Fluidverbindung zwischen den Wasserstoff-Drucktanks (6, 6a, 6b) und dem mindestens einen ersten Längskanal (12a, 12b) sowie dem mindestens einen zweiten Längskanal (12c) selektiv trennbar ist.

3. Wasserstoff-Drucktanksystem (2) nachAnspruch 1 oder 2,
wobei das Rail (4, 20) mindestens einen vierten Längskanal (12e) aufweist, in dem ein Leckagesensor (15) angeordnet ist, der dazu ausgebildet ist, Wasserstoff zu detektieren, der aus einem anderen Längskanal (12a, 12b, 12c, 12d) austritt und durch den Querschnitt des Rails (4, 20) in den vierten Längskanal (12e) eintritt.

4. Wasserstoff-Drucktanksystem (2) nach einem der Ansprüche 1 bis 3,
wobei zwei Wasserstoff-Drucktanks (6, 6a, 6b) an zwei einander entgegengesetzten Seiten angeordnet sind und eine Halteklammer (24) einen formschlüssigen Kontakt mit beiden Wasserstoff-Drucktanks (6, 6a, 6b) herstellt, und
wobei die Halteklammer (24) das Rail (4, 20) quer zu dem mindestens einen Längskanal (12, 12a, 12b, 12c, 12d, 12e) überspannt.

5. Wasserstoff-Drucktanksystem (2) nach Anspruch 1, wobei das Rail (4, 20) mindestens zwei parallel zueinander verlaufende Längskanäle (12, 12a, 12b, 12c, 12d, 12e) aufweist, die in dem Querschnitt voneinander beabstandet sind.

6. Wasserstoff-Drucktanksystem (2) nach Anspruch 1 oder 5, wobei das Rail (4, 20)
mindestens zwei parallel zueinander verlaufende Längskanäle (12, 12a, 12b, 12c, 12d, 12e) aufweist, mit identischen Durchmessern oder durchströmten Flächen und/oder mit voneinander verschiedenen Durchmessern oder durchströmten Flächen.

7. Wasserstoff-Drucktanksystem (2) nach Anspruch 1, 5 oder 6,
wobei in zwei einander diametral gegenüberliegenden Abschnitten der Seitenflächen (16) des Rails (4, 20) jeweils ein Anschlusskanal (14, 14a, 14b) mündet, der mit einem des mindestens einen Längskanals (12, 12a, 12b, 12c, 12d, 12e) verbunden ist.

8. Wasserstoff-Drucktanksystem (2) nach Anspruch 1 oder 5, 6 oder 7,wobei das Rail (4, 20) eine Rippenstruktur an der Seitenfläche (16) zum Zu- oder Abführen von Wärme aufweist.

## Claims

1. Hydrogen pressure tank system (2) having multiple hydrogen pressure tanks (6, 6a, 6b),
wherein the hydrogen pressure tanks (6, 6a, 6b) are each connected to a connection channel of a rail (4, 20) via an individual connection element (18), so that they are connected fluidically to the at least one longitudinal channel (12, 12a, 2b),
and having the rail (4, 20), wherein the rail (4, 20) has a first end face (8), and wherein the rail (4, 20) has a second end face (10), which is arranged opposite the first end face (8), and wherein the rail (4, 20) has at least one longitudinal channel (12, 12a, 12b, 12c, 12d, 12e) which extends from the first end face (8) to the second end face (10), and
wherein the rail (4, 20) is in the form of an extruded profile component with a uniform cross section, and
wherein the at least one longitudinal channel (12, 12a, 12b, 12c, 12d, 12e) is in the form of at least one cutout in the cross section, and wherein the cross section has at least line symmetry or point symmetry or a polygonal shape, and
wherein at least one connection channel (14, 14a, 14b) extends transversely from a side surface (16), extending between the end faces (8,10), into the at least one longitudinal channel (12, 12a, 12b, 12c, 12d, 12e) and is connectable to a connection element (18) for connection of a hydrogen pressure tank (6, 6a, 6b), **characterized in that** the rail (4, 20) has at least one third longitudinal channel (12d) with an electrical line (13) arranged therein.

2. Hydrogen pressure tank system (2) according to Claim 1,
wherein the rail (4, 20) has at least one first longitudinal channel (12a, 12b) and at least one second longitudinal channel (12c),
wherein a flow cross section of the at least one second longitudinal channel (12c) is larger than a flow cross section of the at least one first longitudinal channel (12a), and
wherein a fluidic connection between the hydrogen pressure tanks (6, 6a, 6b) and the at least one first longitudinal channel (12a, 12b) and the at least one second longitudinal channel (12c) is selectively disconnectable.

3. Hydrogen pressure tank system (2) according to Claim 1 or 2,
wherein the rail (4, 20) has at least one fourth longitudinal channel (12e) in which there is arranged a leakage sensor (15) configured to detect hydrogen which escapes from another longitudinal channel (12a, 12b, 12c, 12d) and which enters the fourth longitudinal channel (12e) by way of the cross section of the rail (4, 20).

4. Hydrogen pressure tank system (2) according to one of Claims 1 to 3,
wherein two hydrogen pressure tanks (6, 6a, 6b) are arranged on two mutually opposite sides and a holding bracket (24) establishes a form-fitting contact with both hydrogen pressure tanks (6, 6a, 6b), and
wherein the holding bracket (24) spans the rail (4, 20) transversely to the at least one longitudinal channel (12, 12a, 12b, 12c, 12d, 12e).

5. Hydrogen pressure tank system (2) according to Claim 1, wherein the rail (4, 20) has at least two longitudinal channels (12, 12a, 12b, 12c, 12d, 12e) running parallel to one another that are spaced apart from one another in the cross section.

6. Hydrogen pressure tank system (2) according to Claim 1 or 5, wherein the rail (4, 20)
has at least two longitudinal channels (12, 12a, 12b, 12c, 12d, 12e) running parallel to one another that have identical diameters or flowed-through areas and/or have mutually different diameters or flowed-through areas.

7. Hydrogen pressure tank system (2) according to Claim 1, 5 or 6,
wherein opening out into two mutually diametrically opposite portions of the side surfaces (16) of the rail (4, 20) are in each case one connection channel (14, 14a, 14b) that is connected to one of the at least one longitudinal channel (12, 12a, 12b, 12c, 12d, 12e).

8. Hydrogen pressure tank system (2) according to Claim 1 or 5, 6 or 7, wherein the rail (4, 20) has a rib structure on the side face (16) for supply or removal of heat.

## Revendications

1. Système de réservoir d'hydrogène sous pression (2), comprenant plusieurs réservoirs d'hydrogène sous pression (6, 6a, 6b),
les réservoirs d'hydrogène sous pression (6, 6a, 6b) étant reliés chacun par l'intermédiaire d'un élément de raccordement individuel (18) à un canal de raccordement d'un rail (4, 20), de sorte qu'ils sont en communication fluidique avec l'au moins un canal longitudinal (12, 12a, 2b)
et le rail (4, 20), le rail (4, 20) présentant un premier côté frontal (8) et le rail (4, 20) présente un deuxième côté frontal (10) disposé à l'opposé du premier côté frontal (8), et le rail (4, 20) présentant au moins un canal longitudinal (12, 12a, 12b, 12c, 12d, 12e) s'étendant du premier côté frontal (8) au deuxième côté frontal (10), et
le rail (4, 20) étant réalisé sous la forme de composant profilé extrudé de section transversale constante, et
l'au moins un canal longitudinal (12, 12a, 12b, 12c, 12d, 12e) étant réalisé sous la forme d'au moins un évidement dans la section transversale, et la section transversale présentant au moins une symétrie axiale ou ponctuelle ou une forme polygonale, et
au moins un canal de raccordement (14, 14a, 14b) s'étendant transversalement depuis une surface latérale (16) s'étendant entre les côtés frontaux (8,10) dans l'au moins un canal longitudinal (12, 12a, 12b, 12c, 12d, 12e) et pouvant être relié à un élément de raccordement (18) pour le raccordement d'un réservoir d'hydrogène sous pression (6, 6a, 6b), **caractérisé en ce que** le rail (4, 20) présente au moins un troisième canal longitudinal (12d) dans lequel est disposée une ligne électrique (13).

2. Système de réservoir d'hydrogène sous pression (2) selon la revendication 1, le rail (4, 20) présentant au moins un premier canal longitudinal (12a, 12b) et au moins un deuxième canal longitudinal (12c),
une section transversale d'écoulement de l'au moins un deuxième canal longitudinal (12c) étant plus grande qu'une section transversale d'écoulement de l'au moins un premier canal longitudinal (12a), et
une liaison fluidique entre les réservoirs d'hydrogène sous pression (6, 6a, 6b) et l'au moins un premier canal longitudinal (12a, 12b) et l'au moins un deuxième canal longitudinal (12c) étant sélectivement séparable.

3. Système de réservoir d'hydrogène sous pression (2) selon la revendication 1 ou 2,
le rail (4, 20) présentant au moins un quatrième canal longitudinal (12e) dans lequel est disposé un détecteur de fuite (15) conçu pour détecter l'hydrogène sortant d'un autre canal longitudinal (12a, 12b, 12c, 12d) et pénétrant dans le quatrième canal longitudinal (12e) à travers la section transversale du rail (4, 20).

4. Système de réservoir d'hydrogène sous pression (2) selon l'une quelconque des revendications 1 à 3,
deux réservoirs d'hydrogène sous pression (6, 6a, 6b) étant disposés sur deux côtés opposés l'un à l'autre et une pince de maintien (24) produisant un contact par complémentarité de forme avec les deux réservoirs d'hydrogène sous pression (6, 6a, 6b), et
la pince de maintien (24) présentant le rail (4, 20) transversalement par rapport à l'au moins un canal longitudinal (12, 12a, 12b, 12c, 12d), 12e).

5. Système de réservoir d'hydrogène sous pression (2) selon la revendication 1, le rail (4, 20) présentant au moins deux canaux longitudinaux (12, 12a, 12b, 12c, 12d, 12e) s'étendant parallèlement l'un à l'autre. qui sont espacés les uns des autres dans la section transversale.

6. Système de réservoir d'hydrogène sous pression (2) selon la revendication 1 ou 5, le rail (4, 20)
présentant au moins deux canaux longitudinaux (12, 12a, 12b, 12c, 12d, 12e) parallèles entre eux, avec des diamètres ou des surfaces de passage identiques et/ou avec des diamètres ou des surfaces de passage différents.

7. Système de réservoir d'hydrogène sous pression (2) selon la revendication 1, 5 ou 6,
un canal de liaison (14, 14a, 14b) débouchant dans deux sections diamétralement opposées des surfaces latérales (16) du rail (4, 20), lequel est relié à un de l'au moins un canal longitudinal (12, 12a, 12b, 12c, 12d, 12e).

8. Système de réservoir d'hydrogène sous pression (2) selon la revendication 1 ou 5, 6 ou 7, le rail (4, 20) présentant une structure nervurée sur la surface latérale (16) pour fournir ou évacuer de la chaleur.
